Europäisches Patentamt

(19) European Patent Office

Office européen des brevets

(11) Numéro de publication: **0 261 006**
**B1**

## FASCICULE DE BREVET EUROPEEN

(12)

(45) Date de publication du fascicule du brevet:
**28.02.90**

(21) Numéro de dépôt: **87401869.0**

(22) Date de dépôt: **11.08.87**

(51) Int. Cl.⁴: **B60R 22/46**, F16D 43/02

(54) Tendeur de rappel pour enrouleur de sangle de ceinture de sécurité, notamment pour véhicule automobile.

(30) Priorité: **18.09.86 FR 8613081**

(43) Date de publication de la demande:
**23.03.88 Bulletin 88/12**

(45) Mention de la délivrance du brevet:
**28.02.90 Bulletin 90/9**

(84) Etats contractants désignés:
**DE ES GB IT SE**

(56) Documents cités:
**DE-A- 3 231 509**
**DE-A- 3 400 177**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Escaravage, Gérard, 5, Impasse des Graverots, F-25700 Valentigney(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention concerne un tendeur de rappel pour enrouleur de sangle de ceinture de sécurité, notamment pour véhicule automobile.

On connait dans l'état de la technique un certain nombre de tendeurs pour sangle de ceinture de sécurité de véhicule automobile.

Le DE-A 3 400 177 décrit un tendeur selon le préambule de la revendication 1, comportant une bague fendue.

Par ailleurs, on connait d'après le document FR-A-2 382 903, un dispositif de tension de ceinture de sécurité comprenant un détecteur de collision destiné à être fixé sur le véhicule, un élément pouvant être fixé sur une ceinture de sécurité et qui peut être déplacé de façon à exercer une tension accrue dans la ceinture, ainsi que des moyens réagissant au détecteur de collision pour produire un mouvement rapide dudit élément en vue d'appliquer ladite tension accrue dans le cas d'un accident faisant intervenir une collision à laquelle le détecteur réagit. Dans ce dispositif, les moyens réagissant au détecteur de collision comprennent un agencement à piston et cylindre, le déplacement du piston dans le cylindre étant utilisé pour exercer la tension accrue dans la ceinture.

Ainsi qu'il est représenté en particulier sur la Fig. 3 de ce document, l'agencement à piston et cylindre est relié à l'aide d'un fil flexible à un enrouleur de ceinture de sécurité. Le fil est pré-enroulé sur un tambour disposé sur une portion de l'arbre de l'enrouleur et lors de la détection d'une collision, le piston agit de manière à tirer sur le fil et à faire tourner rapidement le tambour pour assurer l'enroulement de la ceinture de sécurité. Ce tambour est relié à l'arbre de l'enrouleur à l'aide d'un embrayage qui est actionné soit par la force centrifuge quand le tambour tourne, soit par une accélération angulaire du tambour sous l'action du piston.

On connait également d'après le document FR-A-2 491 340, un tendeur de rappel pour enrouleur automatique de ceinture de sécurité du type comportant un accumulateur de force pouvant être déclenché en cas d'accident ainsi qu'un convertisseur d'énergie qui, après déclenchement de l'accumulateur de force, agit sur l'arbre de ceinture de l'enrouleur automatique et lui imprime un mouvement de rotation de tension de rappel. Dans ce dispositif, le convertisseur, d'énergie est constitué par un rouleau rotatif pour un moyen de traction, qui peut être couplé à l'arbre de ceinture et dont le moyen de traction est relié à l'accumulateur de force précité pour, après déclenchement de l'accumulateur de force et après avoir surmonté la force de retenue d'un dispositif de retenue, qui dans ce cas est un goujon de cisaillement, assurer une jonction par accouplement et un mouvement de tension de rappel de l'arbre de ceinture.

Les dispositifs décrits dans ces documents présentent un certain nombre d'inconvénients, notamment au niveau de la complexité des moyens assurant l'accouplement entre les moyens de traction et l'arbre de l'enrouleur.

Le but de l'invention est donc de résoudre ces problèmes en proposant un dispositif qui soit simple, fiable et d'un prix de revient relativement faible.

A cet effet, l'invention a pour objet un tendeur de rappel pour enrouleur de sangle de ceinture de sécurité, notamment pour véhicule automobile, du type comportant des moyens d'accumulation de force pouvant être déclenchés en réponse à la détection d'une décélération brutale du véhicule, lesdits moyens d'accumulation étant reliés à des moyens d'entraînement de moyens d'actionnement en rotation d'un arbre de l'enrouleur, pour lui imprimer un mouvement de rotation d'enroulement, lesdits moyens d'entraînement comportant un organe d'entraînement flexible, caractérisé en ce que les moyens d'actionnement comprenant une bague fendue, disposée autour d'une portion de l'arbre d'enroulement, une réserve d'organe d'entraînement flexible étant enroulée autour de la bague, caractérisé en ceque cette bague est élastique et en ce qu'il est prévu un organe de butée, interposé entre les bords de la bague pour lui conférer une dimension supérieure à celle de ladite portion d'arbre de l'enrouleur et permettre une rotation libre de cette portion d'arbre dans la bague en fonctionnement normal de l'enrouleur, ledit organe de butée étant relié aux moyens d'entraînement et arrachable par ceux-ci lors d'un déclenchement des moyens d'accumulation, pour libérer les bords de la bague et permettre un accouplement par serrage de la bague autour de la portion d'arbre entre les moyens d'entraînement et l'arbre de l'enrouleur, pour forcer l'enroulement de la sangle, et donc exercer une tension accrue sur celle-ci.

L'invention sera mieux comprise à l'aide de la description qui va suivre, donnée uniquement à titre d'exemple et faite en se référant aux dessins annexés, sur lesquels :

- la Fig.1 représente une vue de côté partiellement en coupe d'un dispositif selon l'invention;
- la Fig.2 représente une vue de face partiellement en coupe d'un dispositif selon l'invention; et
- la Fig.3 représente une vue en perspective d'un organe de butée entrant dans la constitution d'un dispositif selon l'invention.

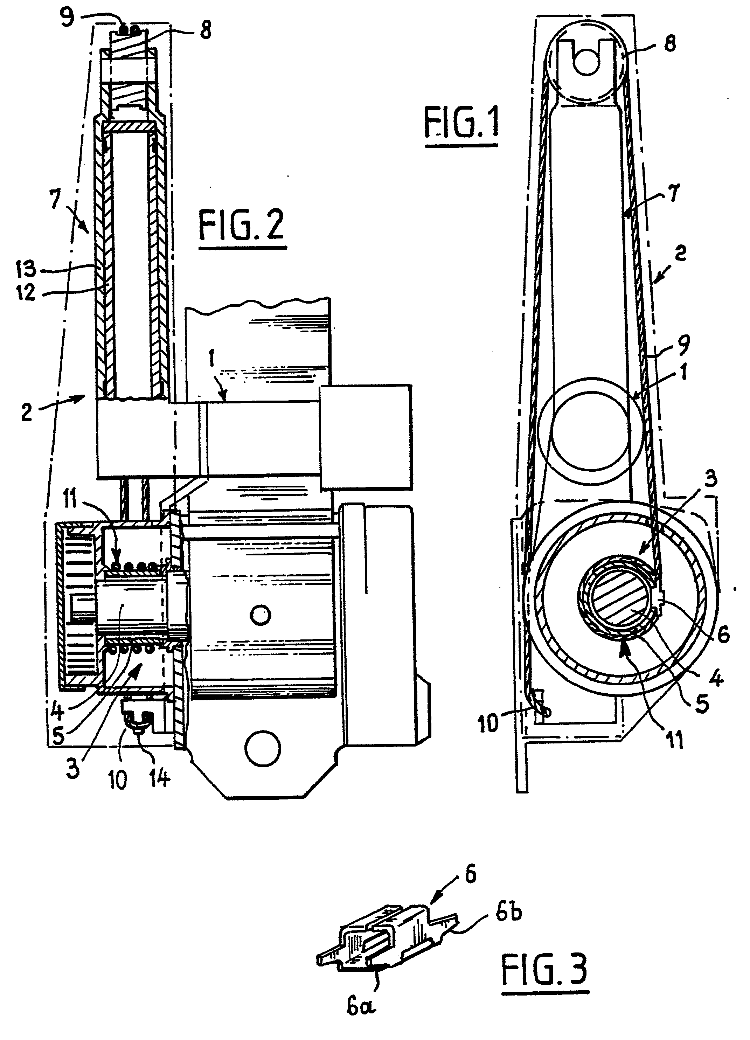

Ainsi qu'on peut le voir sur les Fig.1 et 2, un tendeur de rappel pour enrouleur de sangle de ceinture de sécurité, selon l'invention, s'adapte sur un enrouleur de type connu et comporte des moyens d'accumulation de force 1, tels que par exemple une cartouche pyrotechnique, pouvant être déclenchés en réponse à la détection d'une décélération brutale du véhicule. Ces moyens sont reliés à des moyens d'entraînement 2 de moyens d'actionnement 3 en rotation d'un arbre 4 de l'enrouleur pour lui imprimer un mouvement de rotation d'enroulement. Ces moyens d'actionnement comprennent une bague élastique fendue 5 disposée autour d'une portion de l'arbre 4 d'enrouleur. Un organe de butée 6 est interposé entre les deux bords de la bague fendue pour lui conférer une dimension supérieure à celle de l'arbre de l'enrouleur et permettre une rotation libre de cette portion d'arbre dans la bague en fonctionnement normal de l'enrouleur.

Cet organe de butée est relié aux moyens d'entraînement 2 et arrachable par ceux-ci lors d'un déclenchement des moyens d'accumulation pour libérer les bords de la bague et permettre un accouplement par serrage de la bague autour de la portion d'arbre entre les moyens d'entraînement et l'arbre de l'enrouleur pour forcer l'enroulement de la sangle et donc exercer une tension accrue sur celle-ci.

A cet effet, les moyens d'accumulation de force sont reliés à un dispositif formant vérin 7 comportant une partie déplaçable par rapport à une autre en réponse à un déclenchement des moyens d'accumulation. Cette partie mobile comporte un organe de renvoi, constitué par exemple par une poulie 8, pour un organe d'entraînement flexible 9, faisant partie des moyens d'entraînement, qui peut être constitué par exemple par un fil flexible, dont l'une 10 des extrémités est fixée sur l'enrouleur et l'autre 11 est enroulée autour de la bague. Avantageusement, l'organe de butée est relié à l'organe d'entraînement flexible pour être arraché par celui-ci lors d'un déclenchement des moyens d'accumulation.

Ainsi, à la suite de la détection d'une décélération brutale du véhicule, les moyens d'accumulation de force sont déclenchés, entraînant un mouvement très rapide de la partie mobile des moyens formant vérin 7 et donc de la poulie 8. L'une des extrémités de l'organe d'entraînement flexible étant fixée sur l'enrouleur et cet organe passant autour de la poulie, ceci se traduit par une traction de l'organe d'entraînement, un arrachement de l'organe de butée et un serrage de la bague autour de la portion d'arbre, entraînant un accouplement entre les moyens d'entraînement 2 et l'arbre de l'enrouleur pour forcer l'enroulement de la sangle.

Ainsi qu'il est représenté sur la Fig.3, l'organe de butée 6 présente deux surfaces de portée 6a, 6b adaptées pour coopérer avec les bords de la bague fendue 5 pour les maintenir écartés.

Si l'on revient à la Fig. 2, on constate que les moyens formant vérin 7 comportant deux tubes 12 et 13 disposés l'un dans l'autre. Le tube intérieur 12 est fixe et est relié aux moyens d'accumulation de force 1 tandis que le tube extérieur 13 est monté déplaçable par rapport au tube intérieur et porte à l'une de ses extrémités, l'organe de renvoi 8 pour l'organe d'entraînement flexible.

Il y a lieu de noter que cet organe d'entraînement flexible 9 peut être doublé, c'est à dire que cet organe s'enroule sur une patte de fixation 14 de l'enrouleur, passe par l'organe de renvoi 8, les deux extrémités libres de l'organe étant alors enroulées autour de la bague fendue 5.

Enfin, les moyens d'accumulation de force peuvent être disposés dans le tube intérieur 12 des moyens formant vérin, ce qui permet un gain de place important.

## Revendications

1. Tendeur de rappel pour enrouleur de sangle de ceinture de sécurité notamment pour véhicule automobile, du type comportant des moyens d'accumulation de force (1) pouvant être déclenchés en réponse à la détection d'une décélération brutale du véhicule, lesdits moyens d'accumulation (1) étant reliés à des moyens d'entraînement (2) de moyens d'actionnement (3) en rotation d'un arbre (4) de l'enrouleur pour lui imprimer un mouvement de rotation d'enroulement, lesdits moyens d'entraînement comportant un organe d'entraînement flexible (9), les moyens d'actionnement comprenant une bague fendue (5) disposée autour d'une portion de l'arbre d'enroulement (4), une réserve d'organe d'entraînement flexible (9) étant enroulée autour de la bague (5), caractérisé en ce que cette bague (5) est élastique et en ce qu'il est prévu un organe de butée (6) interposé entre les deux bords de la bague (5), caractérisé en ce que cette bague (5) est élastique et pour lui conférer une dimension supérieure à celle de ladite portion d'arbre de l'enrouleur et permettre une rotation libre de cette portion de l'arbre dans cette bague en fonctionnement normal de l'enrouleur, ledit organe de butée étant relié aux moyens d'entraînement (2) et arrachable par ceux-ci lors d'un déclenchement des moyens d'accumulation (1), pour libérer les bords de la bague (5) et permettre un accouplement par serrage de la bague autour de la portion d'arbre (4) entre les moyens d'entraînement (2) et l'arbre (4) de l'enrouleur pour forcer l'enroulement de la sangle et donc exercer une tension accrue sur celle-ci.

2. Tendeur selon la revendication 1, caractérisé en ce que l'organe de butée (6) est relié à l'organe d'entraînement flexible (9).

3. Tendeur selon la revendication 1 ou 2, caractérisé en ce que l'organe de butée (6) comporte deux surfaces de portée (6a,6b) adaptées pour coopérer avec les bords de la bague fendue (5) pour les maintenir écartés.

## Patentansprüche

1. Rückstraffer für Sicherheitsgurtaufroller, insbesondere für Kraftfahrzeuge mit Kraftspeichereinrichtungen (1), die in Reaktion auf die Erkennung einer heftigen Verzögerung des Fahrzeugs ausgelöst werden können und mit Einrichtungen (2) zum Antrieb von Betätigungseinrichtungen (3) zur Drehung einer Welle (4) des Aufrollers verbunden sind, um diesem eine Aufrolldrehbewegung zu verleihen, wobei die Antriebseinrichtungen ein flexibles Antriebsorgan (9) aufweisen, dadurch gekennzeichnet, daß die Betätigungseinrichtungen einen Spaltring (5) aufweisen, der auf einem Teil der Aufrollwelle (4) sitzt und auf den ein Ende des flexiblen Antriebsorgans (9) aufgerollt ist, daß der Ring (5) elastisch ist und daß ein Anschlagsorgan (6) vorgesehen ist, das zwischen die beiden Ränder des Rings (5) eingesetzt ist, so daß dieser eine größere Abmessung als der Wellenteil des Aufrollers erhält und dieser Wellenteil im Normalbetrieb des Aufrollers sich in dem Ring frei drehen kann, wobei das Anschlagsorgan mit den Antriebseinrichtungen (2) verbunden ist und durch diese bei einer Auslösung der Speichereinrichtungen (1) herausreißbar ist, so daß die Ränder des Rings (5) freigegeben werden und eine Kopplung zwischen den Antriebseinrichtungen (2) und der Welle (4) des Aufrollers durch Klemmung des Rings auf den Wellenteil (4) hergestellt wird, wodurch die Aufrollung des Gurts erzwungen wird und auf diesen infolgedessen eine erhöhte Spannung ausgeübt wird.

2. Rückstraffer nach Anspruch 1, dadurch gekennzeichnet, daß das Anschlagsorgan (6) mit dem flexiblen Antriebsorgan (9) verbunden ist.

3. Rückstraffer nach Anspruch 1 oder 2, dadurch gekennzeichnet, daß das Anschlagsorgan (6) zwei Anlageflächen (6a, 6b) besitzt, die mit den Rändern des Spaltrings (5) so zusammenwirken, daß diese gespreizt gehalten werden.

**Claims**

1. A return tightener for a safety belt strap winder, in particular for a motor vehicle, comprising force accumulating means (1) actuatable in response to the detection of a sudden deceleration of the vehicle, said accumulating means (1) being connected to driving means (2) for driving actuating means (3) for rotating a shaft (4) of the winder so as to impart thereto a rotational winding movement, said driving means comprising a flexible driving element (9), the actuating means comprising a split ring (5) disposed round a portion of the winding shaft (4), a reserve portion of flexible driving element (9) being wound round the ring (5), characterised in that this ring (5) is resilient and in that an abutment element (6) interposed between the two edges of the ring (5) is provided so as to give the ring a dimension exceeding the dimension of said shaft portion of the winder and permit free rotation of this shaft portion in this ring during normal operation of the winder, said abutment element being connected to the driving means (2) and being capable of being pulled away by said driving means upon actuation of said accumulating means (1) so as to release the edges of the ring (5) and permit coupling between the driving means (2) and the winder shaft (4), by tightening the ring round the shaft portion (4), and thereby force the winding of the strap and therefore exert increased tension on the strap.

2. A tightener according to claim 1, characterised in that the abutment element (6) is connected to the flexible driving element (9).

3. A tightener according to claim 1 or 2, characterised in that the abutment element (6) comprises two bearing surfaces (6a, 6b) which are adapted to co-operate with the edges of the split ring (5) so as to keep them apart.

FIG.1

FIG.2

FIG.3